# EUROPÄISCHE PATENTSCHRIFT

(11) **EP 1 682 790 B1**
(45) Veröffentlichungstag und Bekanntmachung des Hinweises auf die Patenterteilung: **21.02.2007**
(21) Anmeldenummer: 04818767.8
(22) Anmeldetag: 10.11.2004
(51) Int. Cl.: F16D 33/04, F16D 33/06, F16D 33/16

(54) **ANFAHREINHEIT**
STARTING UNIT
UNITE DE DEMARRAGE

(30) Priorität: 14.11.2003 DE 10353519
(43) Veröffentlichungstag der Anmeldung: 26.07.2006
(73) Patentinhaber: Voith Turbo GmbH & Co. KG, 89522 Heidenheim (DE)
(72) Erfinder: MENNE, Achim, 74564 Crailsheim (DE)
(74) Vertreter: Dr. Weitzel & Partner
(86) Internationale Anmeldenummer: PCT/EP2004/012698
(87) Internationale Veröffentlichungsnummer: WO 2005/050048

(56) Entgegenhaltungen:
- WO-A1-00/55519
- DE-A1- 19 917 893
- US-A- 2 731 119

## Beschreibung

Die Erfindung betrifft eine Anfahreinheit, im Einzelnen mit den Merkmalen aus dem Oberbegriff des Anspruchs 1.

Anfahreinheiten, umfassend eine hydrodynamische Kupplung, insbesondere eine steuer- bzw. regelbare hydrodynamische Kupplung, sind in einer Vielzahl von Ausführungen aus dem Stand der Technik bekannt. Die Anfahreinheit umfasst dabei einen mit einem Antrieb koppelbaren Eingang und einen mit einem Abtrieb koppelbaren Ausgang. Zwischen dem Eingang und dem Ausgang ist die hydrodynamische Kupplung, umfassend ein Primärschaufelrad und ein Sekundärschaufelrad, die miteinander einen torusförmigen Arbeitsraum bilden, angeordnet. Die hydrodynamische Kupplung ist frei von einem Leitrad. Das Primärschaufelrad ist mit einer Primärradschale drehfest verbunden. Diese umschließt das Sekundärschaufelrad in axialer Richtung und vollständig in Umfangsrichtung. Die Anfahreinheit umfasst des weiteren eine als Überbrückungskupplung fungierende schaltbare Kupplung, welche parallel zur hydrodynamischen Kupplung angeordnet ist und mit dieser gemeinsam oder für sich allein schaltbar ist. Dies bedeutet, dass über beide Kupplungen zwei Leistungszweige realisiert werden können, wobei der Leistungsfluss entweder allein über jeweils eine der Kupplungen oder aber gemeinsam über beide erfolgt. Die schaltbare Kupplung umfasst wenigstens ein Kupplungseingangselement und ein Kupplungsausgangselement, wobei das Kupplungsausgangselement wenigstens mittelbar drehfest mit dem Sekundärschaufelrad verbunden ist. Das Kupplungseingangselement ist wenigstens mittelbar drehfest mit dem Primärrad bzw. dem Eingang E der Anfahreinheit verbunden. Die Wirkverbindung wird entweder direkt zwischen den beiden Kupplungselementen realisiert oder indirekt über weitere Zwischenelemente. Vorzugsweise ist die Überbrückungskupplung als Lamellenkupplung ausgeführt, wobei Mittel zur Erzeugung eines Reibschlusses zwischen den als Lamellen ausgebildeten Kupplungselementen vorgesehen sind. Die Stelleinrichtung umfasst ein mit Druckmittel beaufschlagbares Kolbenelement. Das Kolbenelement kann dabei separat den einzelnen Kupplungsscheiben zugeordnet werden oder aber wird bei einer besonders kompakten Ausführungsform vom Sekundärschaufelrad gebildet bzw. unmittelbar an diesem angeordnet. Der hydrodynamischen Kupplung ist ferner ein Betriebsmittelversorgungssystem zugeordnet. Über dieses wird die zentrifugale oder zentripetale Durchströmung der Kupplung realisiert. Bei zentripetaler Durchströmung wird das Betriebsmittel über einen Betriebsmittelzufuhrkanal oder -raum um den Außenumfang des Sekundärschaufelrades geführt und in radialer Richtung im Bereich des Außendurchmessers des torusförmigen Arbeitsraumes in diesen eingebracht. Dabei wird die durch das Betriebsmittel auf die Stelleinrichtung oder die einzelnen Kupplungselemente aufgebrachte Kraft genutzt, um die schaltbare Kupplung im gelösten Zustand zu halten bzw. zumindest nur mit einem bestimmten Schlupfbetrag zu betreiben. Der Austritt aus dem torusförmigen Arbeitsraum erfolgt im Bereich des radial inneren Durchmessers des Arbeitsraumes in einen darunter angeordneten bzw. mit diesem gekoppelten Raum, welcher auch als zweiter Betriebsmittelführungskanal und/oder -raum bezeichnet wird. Beide, der durch den Innenumfang des Gehäuses und den Außenumfang des Sekundärschaufelrades begrenzte erste Betriebsmittelführungskanal und/oder -raum sowie der zweite Betriebsmittelführungskanal und/oder -raum können dabei hinsichtlich ihrer Funktion vertauscht werden. Dies ist insbesondere bei Umschaltung von der zentripetalen Durchströmung auf zentrifugale Durchströmung erforderlich. Im letztgenannten Fall erfolgt die Zufuhr des Betriebsmittels zur hydrodynamischen Kupplung über den zweiten Betriebsmittelführungskanal und/oder -raum im Bereich des radial inneren Durchmessers des torusförmigen Arbeitsraumes, wobei der Austritt im Bereich des radial äußeren Durchmessers des torusförmigen Arbeitsraumes an einem der Schaufelräder vorgenommen wird. Die schaltbare Kupplung wird dann betätigt. Bei derartigen Anfahreinheiten können somit die Leistungsanteile über die einzelnen Kupplungen - schaltbare Kupplung oder hydrodynamische Kupplung - gezielt und vor allem variiert werden. Dabei ist es insbesondere beim Betrieb der hydrodynamischen Kupplung wünschenswert, das im Bereich sehr hohen Schlupfes durch die hydrodynamische Kupplung aufnehmbare Moment, welches dem vom Primärschaufelrad aufnehmbaren Moment entspricht, möglichst gering zu halten, um eine negative Rückwirkung, insbesondere Drückung der Drehzahl der Antriebsmaschine zu vermeiden. Dies kann durch Einstellung eines minimalen Füllungsgrades realisiert werden, wobei es sich jedoch gezeigt hat, dass diese Maßnahme häufig allein nicht ausreicht, da gerade im Bereich sehr hohen Kupplungsschlupfes, d. h. zwischen 70 und 100 Prozent trotzdem noch zu hohe Momente durch die Kupplung aufgenommen werden, wodurch es zu einer unerwünschten Rückwirkung auf die Drehzahl der mit der hydrodynamischen Kupplung gekoppelten Antriebsmaschine kommen kann, so dass die gewünschte Fahrdynamik nicht mehr gegeben ist.

Der Erfindung liegt daher die Aufgabe zugrunde, eine hydrodynamische Kupplung für den Einsatz in Anfahreinheiten der eingangs genannten Art derart weiterzuentwickeln, dass mit geringem konstruktiven und steuerungstechnischen Aufwand eine Minimierung des Leerlaufmomentes, d. h. insbesondere des durch die hydrodynamische Kupplung bei maximalem Schlupf aufnehmbaren Momentes erzielt wird.

Die erfindungsgemäße Lösung wird durch die Merkmale des Anspruches 1 charakterisiert. Vorteilhafte Ausgestaltungen sind in den Unteransprüchen wiedergegeben.

Dokument US 2,731,119 zeigt eine Anfahreinheit nach dem Oberbegriff des Anspruchs 1.

Erfindungsgemäß werden bei Anfahreinheiten mit einem, mit einem Antrieb koppelbaren Eingang und einem mit einem Abtrieb koppelbaren Ausgang mit dazwischen angeordnetem Anfahrelement in Form eines hydrodynamischen Bauelementes, welchem eine schaltbare Kupplung zur Überbrückung zugeordnet ist, Mittel zur Beeinflussung des Übertragungsverhaltens des hydrodynamischen Bauelementes vorgesehen, die in Form von druckmittelbetätigbaren mechanischen Einbauten ausgeführt sind, welche wenigstens mittelbar auf den sich im Arbeitsraum zwischen Primärschaufelrad und Sekundärschaufelrad einstellenden Arbeitskreislauf wirken. Die druckmittelbetätigbaren mechanischen Einbauten dienen der Realisierung von Störbereichen, die durch in den Arbeitsraum hineinragende Elemente oder aber verschiebbare Kreislauf führende Teile gebildet werden. Die druckmittelbetätigten Einbauten sind dazu mit einer Stelleinrichtung gekoppelt. Die Stelleinrichtung wird von einem Differenzdruck aus einem ersten Druck und einem Steuerdruck beaufschlagt. Dieser erste Druck wird dabei je nach Anordnung der Stelleinrichtung vom Gehäuseinnendruck, dem Druck in einem ersten Betriebsmittelführungskanal oder -raum, einem mit diesen gekoppelten Raum oder dem Druck im Betriebsmittelzufuhrkanal gebildet.oder aber einem Differenzdruck aus einem der letztgenannten Drücke und dem Gehäuseinnendruck bei nichtabgedichteter Stelleinrichtung, insbesondere Zylinder zum Gehäuse im Bereich der Stelleinrichtung. Der Steuerdruck wird von einem in der Umgebung der Anfahreinheit ohnehin vorhandenen oder bereitgestellten Druck gebildet wird, beispielsweise dem Getriebedruck oder dem Fülldruck der Kupplung etc. Je nach Größe bewirkt dieser eine Entlastung der Stelleinrichtung beispielsweise ins Getriebe oder eine echte Beaufschlagung, wie beispielsweise im letzten Beispiel. Der erste Betriebsmittetführungskanal oder -raum wird entweder vollständig oder aber von einem Teilbereich wenigstens eines Nebenraumes gebildet, der wiederum durch das Umschließen wenigstens eines Schaufelrades von einem ruhenden oder rotierenden Gehäuse gebildet wird. Dazu ist die Stelleinrichtung der schaltbaren Kupplung im Nebenraum angeordnet. Diese und der Innenumfang des Gehäuses begrenzt den ersten Betriebsmittelführungskanal oder -raum.

Die Durchströmung der Anfahreinheit, insbesondere der hydrodynamischen Kupplung erfolgt wenigstens zentripetal, d. h. um die Kupplung in den Zwischenraum im Bereich der Trennebene zwischen den Schaufelrädern in den radial äußeren Bereich des Arbeitsraumes. Dabei wird in diesem Zustand die schaltbare Kupplung durchströmt oder deren Stelleinrichtung zumindest mittelbar, d. h. direkt oder indirekt aufgrund der sich an den miteinander in Wirkverbindung bringbaren Kupplungselementen aufbauenden Druckverhältnisse je nach Durchströmungsrichtung beaufschlagt. Erfindungsgemäß werden diese, insbesondere der Druck in diesem Raum oder einem mit diesem gekoppelten Kanal oder Raum zur Beaufschlagung der Stelleinrichtung der mechanischen Einbauten unter dem Einfluss eines weiteren Druckes, dem Steuerdruck genutzt. Die Einstellung eines Differenzdruckes erfolgt derart, dass dieser geeignet ist, während des Anlaufvorganges der hydrodynamischen Kupplung, d.h. sehr hohem Schlupf und bei zunehmender Drehzahl die mechanischen Einbauten in eine Position gegenüber dem Arbeitsraum zu verbringen, die eine besonders starke Beeinflussung der Strömung im Arbeitsraum bewirkt, während bei kleiner werdendem Schlupf diese Beeinflussung aufgehoben wird.

Mit der erfindungsgemäßen Lösung wird es möglich, ohnehin vorhandene Leitungen und Kanäle und sich darin aufbauende und fortpflanzende Drücke zur Beaufschlagung der Stelleinrichtungen der mechanischen Einbauten zu nutzen, wobei vorzugsweise immer nur dann eine Beaufschlagung der mechanischen Einbauten erfolgt, wenn die hydrodynamische Kupplung betätigt ist, d.h. bei zentripetaler Durchströmung im Zustand zumindest teilweise deaktivierter schaltbarer Kupplung. Im Zustand zentrifugaler Durchströmung findet dann in der Regel keine Beaufschlagung statt. Insbesondere würde hier bei Vorliegen eines Steuerdruckes der sich im torusförmigen Arbeitsraum einstellende Kreislauf nicht gestört werden, da die druckmittelbetätigten Einbauten in diesem Zustand in ihrer Neutralstellung, d.h. im Ausgangszustand, der durch die Nichtbeeinflussung des Arbeitskreislaufes charakterisiert ist, verharren würden. Die Beaufschlagung erfolgt mit dem an der Stelleinrichtung wirksam werdenden Druck aus dem Differenzdruck, der in dem ersten Betriebsmittelführungskanal oder -raum oder einem mit diesen wenigstens mittelbar gekoppelten Kanal oder Raum oder dem Gehäuseinnenraum vorliegt und dem Steuerdruck, welcher vorzugsweise von einer ohnehin vorhandenen Druckquelle in der Umgebung der Anfahreinheit gebildet wird. Als Steuerdruck kann beispielsweise der Fülldruck oder der Getriebedruck genutzt werden. In vorteilhafter Weise kann damit eine besonders feinfühlige Einstellung der Position der druckmittelbetätigten mechanischen Einbauten unabhängig vom tatsächlich im Betriebsmittelzufuhrkanal und/oder -raum oder einem mit diesen verbundenem Raum anliegenden und nicht beeinflussbaren Druck erfolgen.

Die schaltbare Kupplung ist bei zentripetaler Durchströmung zumindest teilweise deaktiviert, d. h. entweder vollständig deaktiviert oder wird mit großem Schlupf betrieben. Der erste Betriebsmittelführungskanal oder -raum wird dabei von wenigstens einem Teilbereich des Nebenraumes, insbesondere vom Raum zwischen Gehäuse und Stelleinrichtung der schaltbaren Kupplung gebildet. Dabei kann der erste Betriebsmittelführungskanal oder -raum entweder dem Nebenraum vollständig entsprechen oder aber nur einem Teil. Im ersten Fall fungiert das Sekundärschaufelrad als Stelleinrichtung der schaltbaren Kupplung. Im zweiten ist eine separate Stelleinrichtung vorgesehen. Ferner ist ein zweiter Betriebsmittelführungskanal oder -raum vorgesehen, der der hydrodynamischen Kupplung im radial innen liegenden Bereich zugeordnet bzw. mit einem Arbeitsraum im Bereich des radial inneren Durchmessers gekoppelt ist. Durch Wechsel der Funktionen dieser beiden Betriebsmittelführungskanäle oder -räume als Zufuhr und Abfuhrkanäle kann die Durchströmung von zentripetal in zentrifugal und umgekehrt geändert werden.

Die Größe des Steuerdruckes zur Realisierung der Verschiebung der mechanischen Einbauten wird je nach Anordnung der Stelleinrichtung und Anbindung an die mechanischen Einbauten gewählt bzw. angelegt, so dass immer eine Verschiebung der mechanischen Einbauten in der gewünschten Richtung erfolgt. Bei Ausbildung der mechanischen Einbauten als Ringschieber ist dieser beispielsweise im deaktivierten Zustand der hydrodynamischen Kupplung voll eingefahren, d.h. der den Störbereich bildende Teil befindet sich im Arbeitsraum in der Stellung größtmöglicher theoretischer Beeinflussung. Mit Aktivierung der hydrodynamischen Kupplung wird dieser jedoch in Richtung geringerer Wirkung, d.h. wenigstens teilweise aus dem Arbeitsraum heraus bzw. vorzugsweise vollständig aus diesem heraus gefahren. Der Betrag des Steuerdruckes wird dazu vorzugsweise kleiner bis gleich dem Druck im ersten Betriebsmittelführungskanal oder -raum bzw. einem mit diesen gekoppelten Kanal oder Raum oder dem Gehäuseinnenraum gewählt. D. h. bei alleiniger Beaufschlagung der Stelleinrichtung mit dem Steuerdruck würden die mechanischen Einbauten in ihrer Stellung verharren. Denkbar ist jedoch ein Steuerdruck beliebiger Größe, auch größer als der Gehäuseinnendruck oder der Druck im ersten Betriebsmittelführungskanal oder -raum. Diese Möglichkeit kommt insbesondere bei Ausführungen mit Ausbildung der mechanischen Einbauten in Form von kreislaufführenden Teilbereichen eines Schaufelrades zum Tragen.

Die den mechanischen Einbauten zugeordneten Stelleinrichtungen können verschiedenartig ausgeführt sein. Diese sind im einfachsten Fall als Zylinder-/Kolbeneinheit ausgeführt, umfassend wenigstens ein in einem Zylinder geführtes Kolbenelement, welches mit diesem an wenigstens zwei voneinander weg weisenden Stirnseiten mit Druckmittel beaufschlagbare Arbeitsräume - einen ersten Arbeitsraum und einen zweiten Arbeitsraum - bildet. Der erste Arbeitsraum ist dabei mit dem ersten Betriebsmittelführungskanal oder -raum einem mit diesem verbundenen Kanal oder Raum oder dem Gehäuseinnenraum verbunden, während der zweite Arbeitsraum mit einem Steuerdruckversorgungssystem gekoppelt ist. Der Kolben ist an einer zu der vom Steuerdruck beaufschlagten Stirnseite abgewandten Stirnseite mit den mechanischen Einbauten verbunden. Dies bedeutet, dass die Steuerdruckseite frei von einer Kopplung mit den mechanischen Einbauten ist. Damit wird sichergestellt, dass keine Entlastung von der Steuerdruckseite in den Gehäuseinnenraum erfolgt. Je nach Wahl der Steuerdruckbereitstellung erfolgt die feinstufige Positionierung der mechanischen Einbauten durch gesteuerte Entlastung in eine Umgebung geringeren Druckes durch getaktete Ventileinrichtungen, beispielsweise Ankopplung der Steuerdruckseite an die Umgebung oder direkte Beaufschlagung des Kolbens mit einem Gegendruck.

Zur Einstellung des Steuerdruckes bestehen im Hinblick auf die Ausgestaltung des Steuerdruckversorgungssystems verschiedene Möglichkeiten. Dieses umfasst wenigstens eine Steuerdruckquelle sowie eine Verbindungsleitung, die mit der Stelleinrichtung, bei Ausführung als Zylinder-Kolbeneinheit, mit dem zweiten Arbeitsraum dieser gekoppelt ist. Der Begriff Steuerdruckquelle ist dabei sehr allgemein zu verstehen. Darunter wird sowohl ein Aggregat oder System zur Bereitstellung eines aktiv angelegten Gegendruckes verstanden oder aber auch ein Raum zur Entlastung. Der entsprechende Steuerdruck kann dabei im erstgenannten über eine konstante oder steuerbare Druckmittelquelle bereitgestellt werden oder aber über eine in der Kopplung zwischen der Steuerdruckquelle und der Stelleinrichtung angeordnete Ventileinrichtung eingesteuert werden. Diese ist vorzugsweise als 2/1 Wegeventil ausgeführt, welches zu Steuerungszwecken getaktet ist. Gemäß einer besonders vorteilhaften Ausgestaltung ist das Steuerdruckversorgungssystem Bestandteil des Betriebsmittelversorgungssystems. Dies bedeutet, dass als Steuerdruckquelle die Betriebsmittelquelle bzw. das mit dieser gekoppelte Leitungssystem genutzt werden kann und somit auch der Fülldruck als Steuerdruck genutzt wird. Dies gilt in Analogie auch für evtl. vorhandene Ventileinrichtungen.

Im einfachsten Fall wird als Steuerdruck jedoch ein Druck genutzt, der ohnehin in der Umgebung der Anfahreinheit oder dem Einsatzort dieser vorliegt, insbesondere beim Einsatz in Fahrzeugen in ohnehin zur Realisierung unterschiedlichster Funktionen vorhandenen Systemen vorliegende Drücke, wie z. B. der Druck im Getriebe oder eines anderen hydraulischen oder pneumatischen Systems.

Zur Realisierung einer einfachen Leitungsführung ist die Zylinder-/Kolbeneinheit der Stelleinrichtung derart ausgestaltet, dass die Anbindung der Kolbeneinheit an die mechanischen Einbauten jeweils an der entgegen die erforderliche Verschiebungsrichtung weisende Stirnseite erfolgt. Die Anbindung an einer in Verschiebungsrichtung weisenden Stirnseite ist ebenfalls denkbar. Entscheidend sind die angelegten Drücke. Die Zylinder-Kolbeneinheit kann dazu entsprechend einer der nachfolgend genannten Möglichkeiten gegenüber der mit dem Primärrad gekoppelten Primärradschale oder dem ruhenden Gehäuse angeordnet werden:
a) wenigstens teilweise außerhalb der Primärradschale;
b) innerhalb des Gehäuses oder der Primärradschale, wobei die Zylinder-Kolbeneinheit vorzugsweise bündig mit der Primärradschale abschließt, jedoch frei von einer theoretisch möglichen nur mit zusätzlichen Abdichtmaßnahmen zum Unterbinden der Verbindung zwischen dem zweiten Arbeitsraum der Stelleinrichtung und erstem Betriebsmittelführungskanal oder -raum ist;
c) Anordnung an beliebiger Stelle im Gehäuse oder der Primärradschale mit ortsfester bzw. drehfester Kopplung zu dieser und Anschluss an die Umgebung bzw. Anschlussmöglichkeit für den Steuerdruck.

Die mechanischen Einbauten selbst können dabei auf einem beliebigen Durchmesser zwischen dem Innendurchmesser und dem Außendurchmesser des Arbeitsraumes wirksam werden. Die Wirksamkeit ergibt sich durch die Erstreckung in den sich im Arbeitsraum ausbildenden Arbeitskreislauf. Die durch die mechanischen Einbauten bedingten Störbereiche bzw. Störstellen sind dabei in einem Winkel zum sich im Arbeitskreislauf einstellenden Strömungskreislauf ausgerichtet.

Bezüglich der Ausbildung der einzelnen mechanischen Einbauten bestehen keinerlei Beschränkungen. Diese können beliebig ausgeführt sein. Entscheidend ist jedoch, dass diese geeignet sind, den Strömungskreislauf im Arbeitsraum zu beeinflussen. Vorzugsweise werden dabei Bolzen oder zumindest teilringförmige, d. h. auch ringförmige Elemente, verwendet. Deren den Störbereich charakterisierende wirksame Fläche erstreckt sich dabei über wenigstens einen Teilbereich des Arbeitsraumes in Umfangsrichtung. Es besteht die Möglichkeit, lediglich ein Element zu verwenden oder aber eine Mehrzahl von in Umfangsrichtung zueinander beabstandeten Elementen, wie dies beispielsweise bei Vorsehen von Bolzenelementen möglich wäre. Die konkrete Auswahl der erforderlichen Maßnahmen hängt dabei von der gewünschten Änderungen der Momentenaufnahme bei einem gewünschten Füllungsgrad ab. Nach der Erfindung werden die, mechanische Einbauten als separate, in den Arbeitsraum einführbare Elemente gestaltet oder aber diese von den einzelnen Schaufelrädern bzw. Bestandteilen dieser gebildet. Im letztgenannten Fall wird dabei ein Teilbereich der die Strömung am Arbeitsraum führenden Wände in axialer Richtung verschiebbar ausgeführt. Es handelt sich dabei um einen ringförmigen Wandbereich. Bei Ausführung mit Segmenten, beispielsweise in Umfangsrichtung unterteilten Segmenten, wäre auch eine Verschiebbarkeit in radialer Richtung denkbar. Die mechanischen Einbauten können dabei sowohl dem Primärschaufelrad als auch dem Sekundärschaufelrad zugeordnet sein. Entscheidend ist lediglich, dass die gewünschte Beeinflussung des Arbeitskreislaufes in Strömungsrichtung erfolgt. Die den mechanischen Einbauten zugeordneten Stelleinrichtungen sind dabei vorzugsweise gemäß einer besonders vorteilhaften Ausgestaltung mit konstruktiv einfacher Umsetzung immer an dem Schaufelrad gelagert bzw. geführt, dem die mechanischen Einbauten hinsichtlich ihrer Wirkung zugeordnet sind. Bei Zuordnung zum Primärschaufelrad erfolgt die Lagerung dann an der mit dem Primärschaufelrad drehfest gekoppelten Schale. Dies bedeutet, dass die Stelleinrichtung immer mit der gleichen Drehzahl zum Primärschaufelrad rotiert. Grundsätzlich gilt, dass die mechanischen Einbauten sowohl am Primärschaufelrad als auch am Sekundärschaufelrad angeordnet und geführt werden können, wobei entsprechend der Wahl der Führung der mechanischen Einbauten und deren Ausführung auch die Anordnung der Stelleinrichtung erfolgt. Es ist dabei vorzugsweise immer anzustreben, dass zwischen den Elementen, an denen die Stelleinrichtung gelagert ist und dem entsprechenden Schaufelrad kein Schlupf vorherrscht.

Wie bereits ausgeführt, ist die Stelleinrichtung im einfachsten Fall als Zylinder-Kolbeneinheit mit mindestens zwei Arbeitskammern ausgebildet. Der Zylinder bzw. die den Kolben aufnehmenden Arbeitskammern werden dabei von der Wand des Gehäuses oder aber der Stelleinrichtung der schaltbaren Kupplung gebildet. Die Verbindungsleitung zur Arbeitskammer kann dabei in der Wand des Gehäuses über Zwischenräume, die Wandung oder über eine separate Leitung an der Stelleinrichtung der schaltbaren Kupplung geführt werden. Dies gilt in gleicher Weise für die Steuerdruckleitung.

Beim Steuerdrucksystem zur Bereitstellung des Steuerdruckes kann es sich um ein pneumatisches oder hydraulisches System handeln. Vorzugsweise werden jedoch hydraulische Lösungen gewählt.

Die Ausführung der Zylinder-Kolbeneinheit mit einem Kolben und zwei Arbeitsräumen stellt eine besonders kompakte Ausgestaltung dar. Denkbar ist auch die Ausbildung einer Mehrzahl von in Reihe geschalteten und miteinander über die Kolben gekoppelten einzelnen Zylindern, wobei in diesem Fall die dem Steuerdrucksystem zugeordnete Zylinder-Kolbeneinheit vorzugsweise in axialer Richtung direkt an der Primärradschale angeordnet sein kann, während die dem ersten Betriebsmittelzufuhrkanal oder -raum zugeordnete Zylinder-Kolbeneinheit in axialer Richtung beabstandet zu der dem Steuerdrucksystem zugeordneten angeordnet ist.

Gemäß einer Weiterentwicklung ist der Steuerdruck frei einstellbar, wodurch eine besonders feinfühlige Positionierung der mechanischen Einbauten realisiert werden kann.

Die erfindungsgemäße Lösung wird nachfolgend anhand von Figuren erläutert. Darin ist im Einzelnen folgendes dargestellt:
- Figur 1: verdeutlicht in schematisch vereinfachter Darstellung das Grundprinzip des Aufbaus einer erfindungsgemäß gestalteten Anfahreinheit mit mechanischen Einbauten;
- Figur 2a - 2c: verdeutlichen verschiedene Ausführungen der Anordnung der Stelleinrichtungen mechanischer Einbauten am Primärschaufelrad bzw. dem Gehäuse.

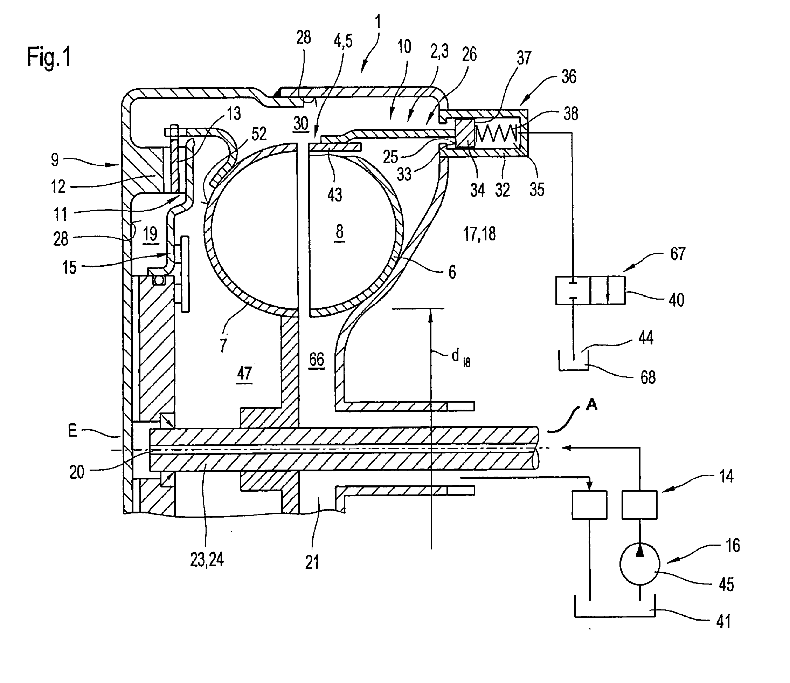

Die Figur 1 verdeutlicht in schematisch vereinfachter Darstellung anhand eines Axialschnittes durch eine Anfahreinheit 1 das Grundprinzip der erfindungsgemäßen Beaufschlagung von Mitteln zur Beeinflussung des Übertragungsverhaltens 2 in Form von druckgesteuerten mechanischen Einbauten 3. Die Anfahreinheit 1 umfasst einen mit einem Antrieb koppelbaren Eingang E und einen mit nachgeschalteten Übersetzungsstufen oder einem anders gearteten Abtrieb koppelbaren Ausgang A. Die Anfahreinheit 1 umfasst ferner ein Anfahrelement 4. Dies ist im vorliegenden Fall in Form einer hydrodynamischen Kupplung 5 ausgeführt. Die hydrodynamische Kupplung umfasst zwei Schaufelräder, ein im Traktionsbetrieb bei Leistungsübertragung vom Eingang E zum Ausgang A betrachtet als Pumpenrad fungierendes Primärrad 6 und ein als Turbinenrad fungierendes Sekundärrad 7 , die miteinander einen mit Betriebsmittel befüllbaren Arbeitsraum 8 bilden. Die hydrodynamische Kupplung 5 ist frei von einem Leitrad und fungiert lediglich als Drehzahlwandler zwischen dem Eingang E und dem Ausgang A, weshalb das Primärrad 6 mit dem Eingang und des Sekundärrad 7 mit dem Ausgang A verbunden ist oder diesen bildet. Die Anfahreinheit 1 umfasst des weiteren eine parallel zum Anfahrelement 4 in Form der hydrodynamischen Kupplung 5 angeordnete schaltbaren Kupplung 9. Hydrodynamische Kupplung 5 und schaltbare Kupplung 9 sind entweder jeweils separat oder aber gemeinsam schaltbar. Die hydrodynamische Kupplung 5 und die schaltbare Kupplung 9 sind in zwei unterschiedlichen Leistungszweigen angeordnet, einem ersten Leistungszweig 10 und einem zweiten Leistungszweig 11. Der erste Leistungszweig 10 ermöglicht dabei die Leistungsübertragung über die hydrodynamische Kupplung 5 und der zweite Leistungszweig 11 die Leistungsübertragung über die schaltbare Kupplung 9. Die schaltbare Kupplung 9 umfasst mindestens zwei miteinander in Wirkverbindung bringbare Kupplungselemente, vorzugsweise in Form von Kupplungsscheiben. Diese sind entweder direkt oder wenigstens indirekt über weitere Zwischenelemente miteinander reibschlüssig verbindbar. In Kraftflussrichtung vom Eingang E zum Ausgang A betrachtet, ist ein erstes Kupplungselement, welches auch als Kupplungseingangselement 12 bezeichnet werden kann und mit diesem gekoppelt ein zweites Kupplungselement, das auch als Kupplungsausgangselement 13 bezeichnet wird mit dem Ausgang A, insbesondere über das Sekundärrad 7.

Die hydrodynamische Kupplung 5 wird in den einzelnen Betriebszuständen der Anfahreinheit zentripetal oder zentrifugal durchströmt. Diese Durchströmungsrichtung bestimmt auch die Leistungsübertragungsrichtung über ersten und/oder zweiten Leistungszweig.

Zum Zwecke der Leistungsaufteilung ist jedem Übertragungselementhydrodynamischer Kupplung 5 und schaltbarer Kupplung 9 - eine Stelleinrichtung, zugeordnet, welche die Schaltbarkeit gewährleistet. Der Anteil der übertragbaren Leistung durch die hydrodynamische Kupplung 5 wird dabei durch die Position und damit Wirkung der mechanischen Einbauten 3 bestimmt. Dazu ist gemäß Figur 1 eine Ventileinrichtung 40 vorgesehen. Optional, d. h. zusätzlich kann dieser Anteil auch über die Steuerung und/oder Regelung des Füllungsgrades FG der hydrodynamischen Kupplung 5 beeinflusst werden. Dazu ist die Stelleinrichtung 14 vorgesehen, die neben der Einstellung der Durchströmungsrichtung auch eine Einstellung des Füllungsg rades bewirken kann. Die Schaltbarkeit der schaltbaren Kupplung 9 wird durch Erzeugung eines entsprechenden Anpressdruckes zwischen den miteinander in Wirkverbindung bringbaren Kupplungselementen gewährleistet. Als Stelleinrichtung 15 fungiert ein Kolben, der wiederum indirekt über die Stelleinrichtung 14 betätig bar ist. Die Steuerung der übertragbaren Leistungsanteile über den ersten und/oder zweiten Leistungszweig 10 bzw. 11 erfolgt somit durch Steuerung bzw. Variation der Anpresskraft an der schaltbaren Kupplung 9 und die Position der druckmittelbetätigten mechanischen Einbauten 3 sowie optional über die Steuerung/Regelung des Füllungsgrades der hydrodynamischen Kupplung 5. Mit dieser Ausführung können zumindest drei Grundfunktionszustände eingestellt werden. Im ersten Grundfunktionszustand ist nur die hydrodynamische Kupplung 5 geschaltet. In diesem wird die am Eingang E anliegende Leistung nur über die hydrodynamische Kupplung 5 übertragen. Die schaltbare Kupplung 9 ist deaktiviert. Die übertragbare Leistung wird durch die Position der druckmittelbetätigten Einbauten zum Arbeitsraum bei einem bestimmten Füllungsgrad bestimmt. Zusätzlich besteht jedoch die Möglichkeit, das Übertragungsverhalten der hydrodynamischen Kupplung 5 über die Veränderung des Füllungsgrades zu beeinflussen. Dabei bewirkt ein steigender Füllungsgrad bei konstanter Drehzahl einen höheren Druck im Arbeitsraum 8 der hydrodynamischen Kupplung 5 und umgekehrt. Im zweiten Grundfunktionszustand ist die schaltbare Kupplung 9 geschaltet. In diesem wird die am Eingang E anliegende Leistung nur noch über diese übertragen. Die hydrodynamische Kupplung 5 ist deaktiviert. Dies wird über die Veränderung des Anpressdruckes realisiert, so dass die Kupplung ohne Schlupf betrieben wird. Im dritten Grundfunktionszustand sind beide Leistungszweige 10 und 11 aktiviert. D. h., es wird ein erster Leistungsanteil über die hydrodynamische Kupplung 5 übertragen und ein zweiter Leistungsanteil über die schaltbare Kupplung 9. Zusätzlich können unter einem weiteren Aspekt die einzelnen Leistungsanteile auch unabhängig voneinander gesteuert werden. Dieser dritte Grundfunktionszustand beinhaltet eine kurzzeitige gemeinsame Aktivierung oder aber eine Aktivierung über einen Hauptteil des Anfahrbereiches.

Im ersten Grundfunktionszustand, dem sogenannten Kupplungs- oder Wandlerbetrieb - je nach Ausführung als hydrodynamische Kupplung 5 oder Wandler - wird dabei Betriebsmittel dem Arbeitsraum 8 über ein Betriebsmittelführungs- bzw. Versorgungssystem 16 zugeführt. Die Durchströmung der Anfahreinheit 1 erfolgt in diesem Falle zentripetal. Die Anfahreinheit 1 umfasst dazu ein Gehäuse 17, welches als ruhendes Gehäuse oder aber, wie in dieser Figur dargestellt, als rotierendes Gehäuse in Form einer Primärradschale 18 ausgeführt ist und drehfest mit dem Primärrad 6 verbunden ist. Die Primärradschale 18 umschließt dabei das Sekundärrad 7 in axialer Richtung und in Umfangsrichtung unter Bildung eines Nebenraumes 47, der einen ersten Betriebsmittelführungskanal oder -raum 19 umfasst, welcher von der Stelleinrichtung 15 und dem Innenumfang 28 des Gehäuses 17 bzw. 18 begrenzt wird. Des weiteren ist ein weiterer zweiter Betriebsmittelführungskanal oder -raum 66 vorgesehen, welcher im Bereich des Innendurchmessers dᵢ₈ des Arbeitsraumes 8 oder unterhalb dessen mündet. Der erste Betriebsmittelführungskanal oder -raum 19 wird dabei für die Betriebsweise des hydrodynamischen Elementes im Kupplungs- oder Wandlerbetrieb je nach Ausgestaltung als hydrodynamische Kupplung 5 oder- hier nicht dargestellt-als Wandler als Betriebsmittelzufuhrraum genutzt, der über einen Betriebsmittelzufuhrkanal 20 mit der Betriebsmittelquelle 41 gekoppelt ist, während der zweite Betriebsmittelführungskanal 66 oder -raum in diesem Zustand als Abfuhrkanal 21 fungiert. Im vom Nebenraum 47 gebildeten ersten Betriebsmittelführungskanal oder -raum 19 ist dabei die schaltbare Kupplung 9 angeordnet, wobei diese derart ausgestaltet ist, dass diese geeignet ist, im ersten Funktionszustand aufgrund des über den ersten Betriebsmittelführungskanal oder - raum 19 geführten Betriebsmittels entlang am Außenumfang 52 der hydrodynamischen Komponente, insbesondere des Sekundärrades 7, geöffnet zu sein. Die schaltbare Kupplung 9 wird dabei in diesem Funktionszustand aufgrund des Druckes des Betriebsmittels im ersten Betriebsmittelführungskanal oder -raum 19, der vom Innenumfang 28 der Primärradschale 18 und der Stelleinrichtung 15 begrenzt wird, im geöffneten Zustand gehalten. Durch eine wahlweise Änderung der Funktion der einzelnen Betriebsmittelführungskanäle bzw. -räume 19, 66 kann die Durchströmungsrichtung der hydrodynamischen Komponente, insbesondere der hydrodynamischen Kupplung 5, auf einfache Art und Weise zwischen zentripetal und zentrifugal geändert werden.

Die Zufuhr zum ersten Betriebsmittelzufuhrkanal oder -raum 19 erfolgt dabei beispielsweise über eine als Hohlwelle 23 ausgeführte Abtriebswelle 24 der Anfahreinheit 1. Erfindungsgemäß sind dem Arbeitskreislauf Mittel 2 zur Beeinflussung des Übertragungsverhaltens, insbesondere zur Beeinflussung des Strömungskreislaufes des sich im Arbeitsraum 8 einstellenden Arbeitskreislaufes, zugeordnet, welche als druckgesteuerte mechanische Einbauten 3 ausgeführt sind. Diese werden erfindungsgemäß über das aus dem Betriebsmittelführungskanal oder -raum 19 oder dem direkt mit diesem gekoppelten Betriebsmittelzufuhrkanal 20 abgezweigte Betriebsmittel beaufschlagt. Die Beaufschlagung erfolgt dabei nicht direkt, sondern unter Bildung eines Differenzdruckes aus dem Druck im ersten Betriebsmittelführungskanal oder -raum 19 oder einem mit diesen gekoppelten Kanal oder Raum oder dem Druck im Innenraum 47 des Gehäuses im Bereich der Stelleinrichtung 26 und einem Steuerdruck. Dazu ist ein Steuerdruckversorgungssystem 67 vorgesehen, umfassend eine Steuerdruckmittelquelle 68, die mit einer Stelleinrichtung 26 für die druckgesteuerten mechanischen Einbauten 3 gekoppelt ist. Die druckgesteuerten mechanischen Einbauten 3 können dabei verschiedenartig ausgeführt sein. Allen gemeinsam ist jedoch, dass diese eine Ablenkung des Strömungskreislaufes des sich im Arbeitsraum 8 einstellenden Arbeitskreislaufes bewirken. Dazu sind diese als in einem Winkel zum Strömungskreislauf im Arbeitsraum 8 anordenbare Elemente ausgeführt oder als parallel zum Strömungskreislauf ausgebildete Führungselemente, beispielsweise in Form von Wänden der Schaufelräder, die in ihrer Lage in axialer und/oder bei Ausführungen eines Schaufelrades mit in Umfangsrichtung unterteilten Segmenten in radialer Richtung verschiebbar sind. Beispiele für die konkrete Ausgestaltung sind in den nachfolgenden Figuren wiedergegeben.

Die in der Figur 1 dargestellte Ausführung der Stelleinrichtung 26 ist durch eine Zylinder-Kolbeneinheit 36 charakterisiert, umfassend einen Zylinder 32, in dem ein mit den mechanischen Einbauten 3 gekoppelter Kolben 34 geführt ist. Die Zylinder-Kolbeneinheit 36 umfasst zwei Arbeitskammern, eine erste Arbeitskammer 25, in welcher eine Stirnseite 33 des Kolben 34 mit dem Druckmittel aus einem Zwischenraum 30 zwischen dem Innenumfang 28 der Primärradschale 18 und dem Primärrad 6, der mit dem Raum 19 gekoppelt ist, beaufschlagt wird und eine weitere Arbeitskammer 35, die den Kolben 34 auf einer von der ersten Arbeitskammer 25 abgewandten Stirnseite 37 beaufschlagt. Ferner ist eine Federeinrichtung 38 vorgesehen, die den Kolben 34 in eine vordefinierte Ausgangsposition bringt und damit auch die an diesen angekoppelten mechanischen Einbauten 3. Die zweite Arbeitskammer 35 ist ferner mit dem Steuerdruckmittelversorgungssystem 67 gekoppelt. Dieses kann beispielsweise von einem Raum in der Umgebung der Anfahreinheit wie dem Getriebe gebildet werden. Zur Einstellung des Differenzdruckes ist eine Ventileinrichtung 40 vorgesehen, welche getaktet werden kann. Die Anbindung der mechanischen Einbauten 3 an den Arbeitskolben 34 erfolgt im dargestellten Fall in Verschiebungsrichtung betrachtet. Die Verschiebung erfolgt dabei derart, dass im Anfahrbereich, d. h. Bereich hohen Schlupfes die Beeinflussung durch die mechanischen Einbauten gegeben ist und im Bereich geringeren Schlupfes diese Beeinflussung reduziert bzw. ganz eliminiert wird. Die Stellung der mechanischen Einbauten wird daher als Funktion der Drücke, insbesondere der sich an dem einzelnen Einbauteil, eingestellt. Dabei ist im Anfahrbereich der hydrodynamischen Kupplung der Wandbereich 43 vollständig verschoben und wird während der Leistungsübertragung über die hydrodynamische Kupplung im Bereich geringeren Schlupfes wieder eingefahren, so dass dieser wieder Führungsfunktion für den Strömungskreislauf übernimmt.

Die Zylinder-Kolbeneinheit 36 ist wenigstens teilweise außerhalb des Gehäuses 17 angeordnet. Im dargestellten Fall schließt diese vorzugsweise bündig mit diesem ab. Dadurch sind keine zusätzlichen Abdichtmaßnahmen für den zweiten Arbeitsraum bzw. die zweite Arbeitskammer 35 gegenüber dem Innenraum 30 bzw. dem Betriebsmittelführungskanal oder -raum 19 erforderlich. Entscheidend ist, dass der Steuerdruck entgegen der Verschiebungsrichtung an der Stelleinrichtung 26 wirksam wird, während der Druck im Betriebsmittelzufuhrkanal oder -raum 19 bzw. einem mit diesem gekoppelten Raum, hier 30 als Teilbereich des durch die Primärradschale 18 gebildeten Nebenraumes 47, in erforderlicher Verschiebungsrichtung der mechanischen Einbauten 3 wirksam wird. Diese sind im dargestellten Fall als den Arbeitskreislauf führende Elemente in Form eines ringförmigen Wandbereichs 43 am Primärschaufelrad 6 ausgeführt.

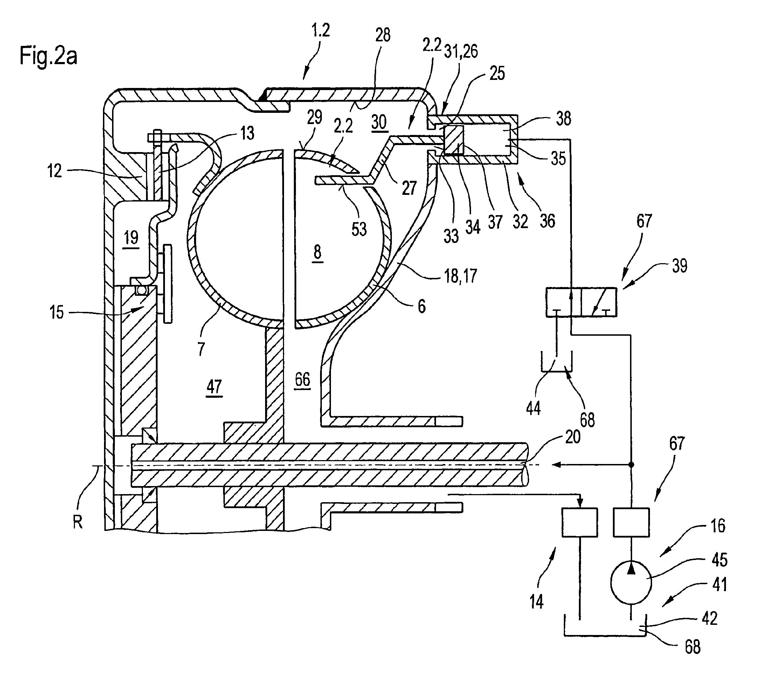

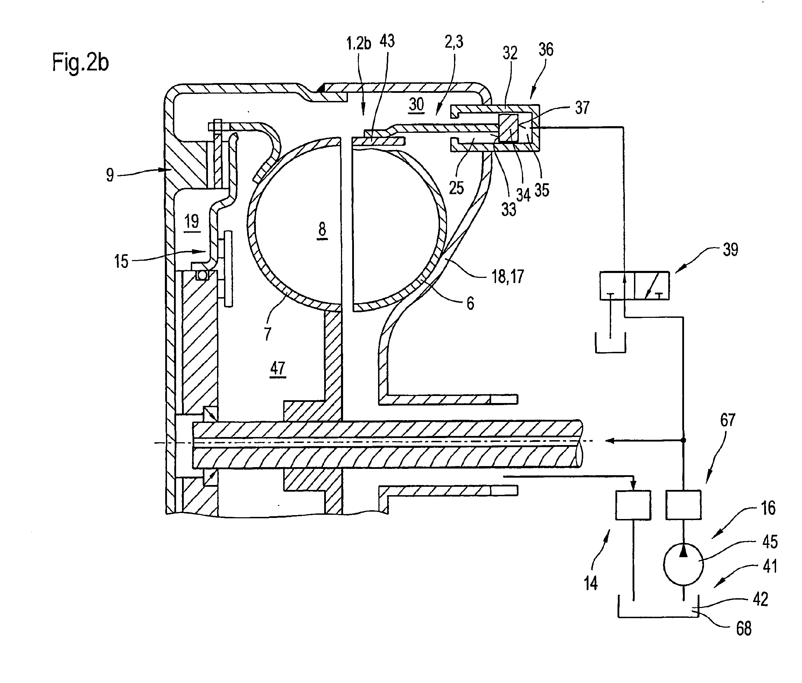

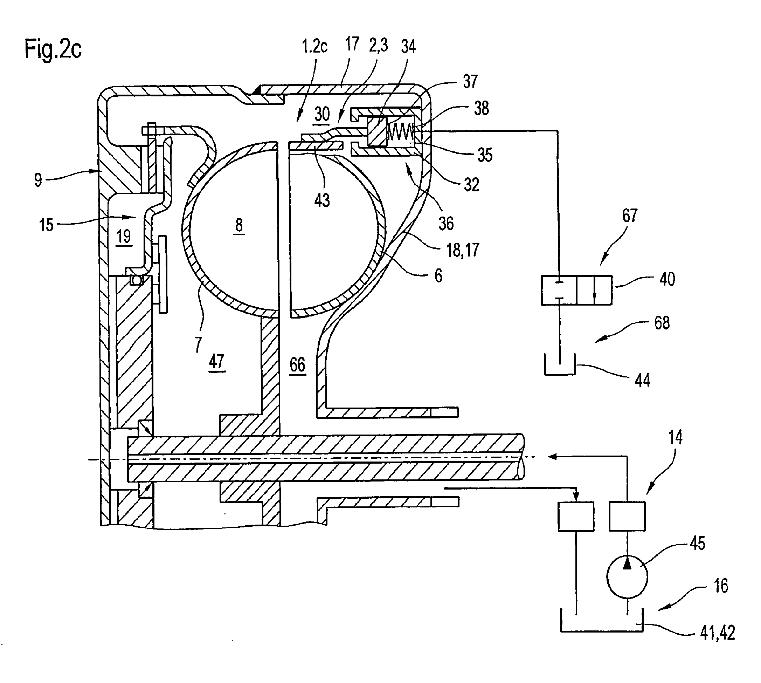

Die Figur 2a verdeutlicht eine erste Ausgestaltungsmöglichkeit einer Anfahreinheit 1.2 mit Mitteln 2.2 zur Beeinflussung des Übertragungsverhaltens in Form von sogenannten Ringschiebern 27, welche im Arbeitsraum 8 wirksam werden. Bei diesen handelt es sich um teilringförmige Elemente, welche sich in axialer Richtung wenigstens teilweise durch ein Schaufelrad erstrecken, wobei die den Innenumfang 53 dieser charakterisierenden Fläche in einem Winkel zum Strömungskreislauf im Arbeitsraum 8 ausgerichtet ist, vorzugsweise nahezu senkrecht. Der Ringschieber 27 ist hier dem Primärschaufelrad 6 zugeordnet. Dieser ist am Primärschaufelrad 6 geführt und gegenüber diesem in axialer Richtung, d. h. parallel zur Rotationsachse R, verschiebbar. Die Verschiebung erfolgt somit entgegen der Ausführung in Figur 1 im Bereich sehr hohen Schlupfes den Arbeitsraum 8 hinein und im nicht beeinflussenden Zustand in den zwischen dem Innenumfang 28 des Gehäuses 17 oder der Primärradschale 18 und dem Außenumfang 29 des Primärrades 6.2 gebildeten Zwischenraum 30, wobei dann keine oder nur eine geringe Beeinflussung des Strömungskreislaufes im Arbeitsraum 8 gegeben ist. Dem Ringschieber 27 ist eine Stelleinrichtung 31 zugeordnet. Bei dieser handelt es sich um die Stelleinrichtung 26 gemäß Figur 1. Diese ist vorzugsweise am Gehäuse 17, im dargestellten Fall der Primärradschale 18, gelagert und mit dem Ringschieber 27 gekoppelt. Die Stelleinrichtung 31 umfasst eine mit Druckmittel betätigbare Zylinder-Kolbeneinheit 36, umfassend einen Zylinder 32, dessen Arbeitskolben 34 mit dem Ringschieber 27 verbunden ist. Die mit dem Ringschieber 27 gekoppelte Stirnseite 33 ist dabei mit Druckmittel aus dem Innenraum 30, der mit Betriebsmittelführungskanal oder -raum 19 gekoppelt ist, beaufschlagbar. Die andere Stirnseite des Kolbens 34 ist mit dem Steuerdruck aus der Steuerdruckmittelquelle 67 beaufschlagbar. Der Zylinder 32 kann dabei vom Gehäuse 17 bzw. der Primärradschale 18 oder einem mit diesem ortsfest bzw. drehfest verbundenen Element gebildet werden. In diesem ist dann der Arbeitskolben 34 geführt. Die Kopplung der ersten Arbeitskammer 25 mit dem Betriebsmittelführungskanal oder - raum 19 oder dem Betriebsmittelzufuhrkanal 20 erfolgt über den mit diesem verbundenen Zwischenraum 30. Die Verbindung des Betriebsmittelzufuhrkanals oder -raums 19 mit der Betriebsmittelzufuhrleitung 20 erfolgt beispielsweise über eine in das Gehäuse integrierte Leitung und/oder einem Kanal und/oder Raum. Vorzugsweise erfolgt die Ausbildung der Kanäle durch Integration in Wandbereichen an der Primärradschale 18, separate Rohrleitungen sind ebenfalls denkbar. Die Anordnung der Stelleinrichtung erfolgt vorzugsweise in einem Bereich, der in axialer Richtung in Verschiebungsrichtung des Ringschiebers 27 liegt. Bei der in der Figur 2a dargestellten Ausführung erfolgt die Anordnung dabei außerhalb der Primärradschale 18. Erstreckungen in den Zwischenraum 30 sind ebenfalls denkbar und in der Figur 2b dargestellt. Ferner ist es denkbar, gemäß Figur 2c diese Zylinder-Kolbeneinheit 36 vollständig im Gehäuse 17 zu integrieren, wobei auch hier auf die Anbindung an den Kolben 34 geachtet wird, so dass die Kopplung mit den mechanischen Einbauten vorzugsweise immer an der entgegen die Verschiebungsrichtung zwischen der gewünschten Position bei hohem Schlupf und geringem Schlupf weisenden Stirnseite liegt und somit die Beaufschlagung aus dem Betriebsmittelführungskanal oder -raum 19 immer in Verschiebungsrichtung aus der Neutralstellung, d. h. einer Position im unbeeinflussenden Zustand in den beeinflussenden Zustand erfolgt. Denkbar ist auch die Anbindung der mechanischen Einbauten 3 an den Kolben 34 in Verschiebungsrichtung. Allerdings sind in diesem Fall die Drücke entsprechend zu wählen.

Verdeutlicht die in der Figur 2a dargestellte Ausführung mechanische Einbauten 3 in Form eines Ringschiebers 27, zeigen die Figuren 1 und 2b bis 2c eine alternative Ausgestaltung mit Bildung dieser von Wandbereichen 43 an einem der Schaufelräder, vorzugsweise am Primärrad 6. Dieser Wandbereich 43 ist vorzugsweise ringförmig ausgeführt, teilringförmige Ausführungen sind bei drehfester Anbindung der Stelleinrichtung 26 bzw. 31 an ein drehfest mit dem Primärrad 76 gekoppeltes Element ebenfalls denkbar. Der Wandbereich 43 dient dabei der Führung des Betriebsmittels im Arbeitskreislauf im Arbeitraum 8.

Bei den in den Figuren 1 und 2c wiedergegebenen Ausführungen ist in der zweiten Arbeitkammer 35 zusätzlich eine Federeinheit 38 vorgesehen, die sich an der Innenwand des Zylinders 32 und einer von der Anbindung der mechanischen Einbauten 3 an den Kolben 34 abgewandten Stirnseite 37 des Kolbens 34 abstützt. Diese ist vorzugsweise derart ausgelegt, dass die durch diese aufgebrachte Vorspannkraft ausreicht, den Kolben 34 sicher in einer Ausgangsposition zu halten. Die Ausgangsposition bzw. der Kolben 34 ist dadurch charakterisiert, dass die mechanischen Einbauten 3 keinen Einfluss auf die Strömung im Arbeitskreislauf ausüben bzw. die Wandbereiche 43 an den Schaufelrädern die Strömung führen.

Des weiteren verdeutlichen die Figuren 2a und 2b in vorteilhafter Ausgestaltung eine Möglichkeit der gemeinsamen Nutzung von Komponenten durch das Betriebsmittelversorgungssystem 16 und das Steuerdruckversorgungssystem 67. Beide Systeme sind miteinander gekoppelt und nutzen eine gemeinsame Betriebs- bzw. Druckmittelquelle. Dabei erfolgt die Ankoppelung an den bei zentripetaler Durchströmung als Betriebsmittelzufuhrleitung oder - Kanal 20 fungierenden Kanal. Die Steuerung des Steuerdruckes erfolgt dann über Ventileinrichtungen, hier die Ventileinrichtung 39, welche als 3/2-Wegeventil ausgeführt sein kann und vorzugsweise steuerbar ist. Die Steuerdruckmittelquelle 68 bzw. die Betriebsmittelquelle 41 des Betriebsmittelführungs- und Versorgungssystems 16 ist beispielsweise als Tank 42 ausgeführt. Dies gilt in Analogie auch für die Ausführungen gemäß der Figuren 1 und 2c mit getrennten Betriebsmittel- und Steuerdruckmittelquellen 41 bzw. 68. Dann ist die Steuerdruckmittelquelle beispielsweise als ein einen Raum bildendes Gehäuse 44 des Getriebes ausgebildet. Ferner integriert in die einzelnen Betriebsmittelversorgungs- und Steuerdruckmittelversorgungssysteme 16 bzw. 67 sind entsprechende Fördereinrichtungen zur Gewährleistung des Betriebs- bzw. Steuerdruckmittelflusses bzw. -umlaufes. Für das Betriebsmittelversorgungs- und Führungssystem 16 sind diese mit 45 bezeichnet.

Je nach Größe des sich aus den in den Arbeitskammern 35 und 25 vorliegenden Drücken, die dem Steuerdruck und dem Druck im Betriebsmittelführungskanal bzw. - raum 19 bzw. in dem mit diesem gekoppelten Zwischenraum 30 vorliegenden Druck entsprechen, ergebenden Gesamtsteuerdruckes gestaltet sich dabei der am Kolben 34 wirksam werdende Druck. Dieser wird beispielsweise in einen Stellweg S für die axiale Verschiebung des Ringschiebers 27 bzw. der Wandbereiche 43 umgewandelt. Um im unbeeinflussten Zustand keine Behinderung des Ringschiebers 27 bzw. der Wandbereiche 43 und bei der Betätigung eine feste Zuordnung zum jeweiligen Schaufelrad zu haben, sollten der Ringschieber 27 bzw. die Wandbereiche 43 und die diesem zugehörigen Stelleinrichtungen 26, 31 mit der gleichen Drehzahl wie das Schaufelrad, an welchem diese wirksam werden, rotieren. Daher erfolgt die Anlenkung bei Zuordnung zum Primärschaufelrad 6 vorrangig zu der drehfest mit diesem gekoppelten Primärradschale 18. Die Führung des Druckmittels in Form von aus dem Betriebsmittelzufuhrkanal abgezweigten Betriebsmittel kann, wie in den Figuren 1 und 2 dargestellt, zwischen Primärradschale 18 und Stelleinrichtung 15 der schaltbaren Kupplung 9 um das Sekundärschaufelrad 7 erfolgen.

Wirkt gemäß Figur 2a ein Ringschieber 27 und gemäß der Figuren 1 und 2b, 2c ein Wandbereich 43 auf den Arbeitskreislauf im Arbeitsraum 8, so sind auch Ausführungen mit Bolzenelementen denkbar. Ebenfalls denkbar sind hier nicht dargestellte Ausführungen mit Wirkung der mechanischen Einbauten 3 am Sekundärrad.

### Bezugszeichenliste

- 1, 1.2, 1.2b, 1.2c: Anfahreinheit
- 2: Mittel zur Beeinflussung des Übertragungsverhaltens
- 3: Druckmittel gesteuerte mechanische Einbauten
- 4: Anfahrelement
- 5: hydrodynamische Kupplung
- 6: Primärschaufelrad
- 7: Sekundärschaufelrad
- 8,: Arbeitsraum
- 9: Schaltbare Kupplung
- 10: erster Leistungszweig
- 11: zweiter Leistungszweig
- 12: Kupplungseingangselement
- 13: Kupplungsausgangselement
- 14: Stelleinrichtung
- 15: Stelleinrichtung
- 16: Betriebsmittelführungs- und/oder Versorgungssystem
- 17: Gehäuse
- 18: Primärradschale
- 19: erster Betriebsmittelführungskanal oder -raum
- 20: Betriebsmittelzufuhrkanal
- 21: Abfuhrkanal
- 22: radial äußerer Bereich
- 23: Hohlwelle
- 24: Ausgangswelle
- 25: erste Arbeitskammer
- 27: Ringschieber
- 28: Innenumfang
- 29: Außenumfang
- 30: Zwischenraum
- 31: Stelleinrichtung
- 32: Zylinder

- 33: mit dem Ringschieber gekoppelte Stirnseite des Kolbens
- 34: Arbeitskolben
- 35: zweite Arbeitskammer
- 36: Zylinder-Kolbeneinheit
- 37: Stirnseite
- 38: Federeinrichtung
- 39: Ventileinrichtung
- 40: Ventileinrichtung
- 41: Betriebsmittelquelle
- 42: Tank
- 43: Wandbereich
- 44: Gehäuse
- 45: Pumpeinrichtung
- 46: Nebenraum
- 47: Innenraum
- 52: Außenumfang
- 53: Innenumfang
- 66: zweiter Betriebsmittelführungskanal oder -raum
- 67: Steuermittelversorgungssystem
- 68: Steuerdruckquelle

## Patentansprüche

1. Anfahreinheit (1; 1.2; 1.2b; 1.2c)
1.1 mit einem mit einem Antrieb koppelbaren Eingang (E) und einem mit einem Abtrieb koppelbaren Ausgang (A);
1.2 mit einem Anfahrelement (4) in Form eines hydrodynamischen Bauelementes, umfassend mindestens ein Primärschaufelrad (6) und ein Sekundärschaufelrad (7), die miteinander einen mit Betriebsmittel befüllbaren Arbeitsraum (8) bilden;
1.3 mit einer schaltbaren Kupplung (9), umfassend wenigstens zwei miteinander direkt oder indirekt Ober weitere Zwischenelemente reibschlüssig in Wirkverbindung bringbare Kupplungselemente (12, 13) - ein erstes wenigstens mittelbar drehfest mit dem Eingang verbundenes Kupplungseingangselement (12) und ein zweites wenigstens mittelbar drehfest mit dem Ausgang verbundenes Kupplungsausgangselement (13) -, und einer dieser zugeordneten Stelleinrichtung (15, 14);
1.4 mit einem ruhenden oder rotierenden Gehäuse (17, 18) welches wenigstens eines der Schaufelräder unter Bildung eines Nebenraumes (47) umschließt;
1.5 die Stelleinrichtung (15) der schaltbaren Kupplung (9) ist im Nebenraum (47) unter Bildung eines ersten Betnebsmittetzufuhrkanats oder -raumes (19) angeordnet und durch den darin vorherrschenden Druck beaufschlagbar;
1.6 der Betriebsmittelzufuhrkanal oder -raum (19) ist wenigstens mittelbar mit einer Betriebsmittelversorgungsquelle (41) verbindbar; **gekennzeichnet durch** die folgenden Merkmale:
1.7 mit Mitteln (2) zur Beeinflussung des Übertragungsverhaltens des hydrodynamischen Bauelementes (5), umfassend wenigstens ein an einem Schaufelrad gelagertes mechanisches Einbauteil (3) in Form von separaten, in den Arbeitsraum einführbare Elementen oder von Teilbereichen der Wände der Schaufelräder bildenden Elementen, welches wenigstens mittelbar auf den sich im Arbeitsraum (8) einstellenden Arbeitskreislauf wirkt;
1.8 mit einer dem mechanischen Einbauteil (3) zugeordneten Stelleinrichtung (26, 31) und Mitteln zur Beaufschlagung dieser mit einem Differenzdruck, der sich aus dem Druck im ersten Betriebsmittelführungskanal oder -raum (19) oder einem mit diesem gekoppelten Kanal oder Raum (30, 20) oder dem Gehäuseinnenraum (30) und einem Steuerdruck ergibt.

2. Anfahreinheit (1; 1.2; 1.2b; 1.2c) nach Anspruch 1, **gekennzeichnet durch** die folgenden Merkmale:
2.1 die Stelleinrichtung (26, 31) der mechanischen Einbauten (3) umfasst wenigstens eine Zylinder-Kolbeneinheit (36), umfassend wenigstens ein in einem Zylinder (32) geführtes Kolbenelement (34), welches mit diesem an wenigstens zwei voneinander wegweisenden Stirnseiten (33, 37) mit Druckmittel beaufschlagbare Arbeitskammern (35, 25) - eine erste Arbeitskammer und eine zweite Arbeitskammer (35) - bildet;
2.2 die erste Arbeitskammer (25) ist wenigstens mittelbar mit dem Betriebsmittelführungskanal oder -raum (19) oder dem Betriebsmittelzufuhrkanal (20) verbunden, während die zweite Arbeitskammer (35) mit einem Steuerdruckversorgungssystem (67) verbunden ist;
2.3 der Kolben (34) ist an einer von der vom Steuerdruck beaufschlagten Stirnseite (37) abgewandten Stirnseite (33) mit den mechanischen Einbauten (3) gekoppelt.

3. Anfahreinheit (1; 1.2; 1.2b; 1.2c) nach Anspruch 2, **dadurch gekennzeichnet, dass** der Kolben (34) an der mit den mechanischen Einbauten (3) gekoppelten Stirnseite (33) vom Betriebsmittel aus dem ersten Betriebsmittefführungskanal oder -raum (19) oder einem mit diesem gekoppelten Kanal oder Raum (30, 20) beaufschlagt wird.

4. Anfahreinheit (1; 1.2; 1.2b; 1.2c) nach Anspruch 2 oder 3, **dadurch gekennzeichnet, dass** das Steuerdruckversorgungssystem (67) wenigstens eine konstante oder steuerbare Druckmittelquelle umfasst, die Ober wenigstens eine Ventileinrichtung (39, 40) mit der Stelleinrichtung (31) gekoppelt ist.

5. Anfahreinheit (1; 1.2; 1.2b; 1.2c) nach einem der Ansprüche 1 bis 4, **dadurch gekennzeichnet, dass** die druckmittelbetätigten mechanischen Einbauten (3) entweder am Gehäuse (17,18) und/oder an einem Schaufelrad (6, 7) geführt sind.

6. Anfahreinheit (1; 1.2; 1.2b; 1.2c) nach einem der Ansprüche 1 bis 5, **dadurch gekennzeichnet, dass** die den einzelnen mechanischen Einbauten (3) zugeordneten Stelleinrichtungen (31, 26) am ruhenden oder drehfest mit dem Primärschaufelrad (6) gekoppelten Gehäuse (17, 18) gelagert sind.

7. Anfahreinheit (1; 1.2; 1.2b; 1.2c) nach einem der Ansprüche 4 bis 6, **dadurch gekennzeichnet, dass** die Kopplung mit der Steuerdruckmittelquelle (67) durch die Wand des Gehäuses (17, 18) oder einem mit dem einzelnen Schaufelrad (6, 7) drehfest gekoppelten Element geführt ist.

8. Anfahreinheit (1; 1.2; 1.2b; 1.2c) nach einem der Ansprüche 1 bis 7, **dadurch gekennzeichnet, dass** das Druckmittel aus dem Betriebsmittelzufuhrkanal und/oder -raum (19) über eine mit diesem wenigstens mittelbar verbundene Verbindungsleitung zur Stelleinrichtung (31, 26) geführt wird.

9. Anfahreinheit (1; 1.2; 1.2b; 1.2c) nach Anspruch 8, **dadurch gekennzeichnet, dass** die Verbindungsleitung im Gehäuse (17, 18) geführt ist.

10. Anfahreinheit (1; 1.2; 1.2b; 1.2c) nach einem der Ansprüche 1 bis 9, **dadurch gekennzeichnet, dass** die druckmittelbetätigten mechanischen Einbauten (3) einen in axialer Richtung verschiebbaren Ringschieber (27) umfassen, der von einem sich in Umfangsrichtung erstreckenden und wenigstens teilringförmigen Element gebildet wird.

11. Anfahreinheit (1; 1.2; 1.2b; 1.2c) nach einem der Ansprüche 1 bis 10, **dadurch gekennzeichnet, dass** die druckmittelbetätigten mechanischen Einbauten (3) von einem in axialer Richtung verschiebbaren bolzenförmigen Element gebildet werden.

12. Anfahreinheit (1; 1.2; 1.2b; 1.2c) nach einem der Ansprüche 1 bis 11, **dadurch gekennzeichnet, dass** die mechanischen Einbauten (3) von einem Teilbereich der Wand (43) eines Schaufelrades (6, 7) gebildet wird der zur Führung des Strömungskreislaufes dient.

13. Anfahreinheit (1; 1.2; 1.2b; 1.2c) nach einem der Ansprüche. 1 bis 12, **dadurch gekennzeichnet, dass** die druckmittelbetätigten mechanischen Einbauten (3) dem Primärschaufelrad (6) zugeordnet sind.

14. Anfahreinheit (1) nach einem der Ansprüche 1 bis 12, **dadurch gekennzeichnet, dass** die druckmittelbetätigten mechanischen Einbauten (3) dem Sekundärschaufelrad (7) zugeordnet sind.

15. Anfahreinheit (1,1.2) nach einem der Ansprüche 1 bis 14, **dadurch gekennzeichnet, dass** das Steuerdruckmittelversorgungssystem (67) Bestandteile des Betriebsmittelversorgungs- und Führungssystems (16) beinhaltet.

16. Anfahreinheit (1; 1.2) nach Anspruch 15, **dadurch gekennzeichnet, dass** die Steuerdruckquelle (44) von der Betriebsmittelquelle (41) gebildet wird.

17. Anfahreinheit (1, 1.2) nach einem der Ansprüche 1 bis 14, **dadurch gekennzeichnet, dass** das Steuerdruckmittelversorgungssystem (67) von einem in der Umgebung der Anfahreinheit (1, 1.2) angeordneten hydraulischen oder pneumatischen System gebildet wird.

18. Anfahreinheit (1; 1.2) nach Anspruch 17, **dadurch gekennzeichnet, dass** die Steuerdruckquelle (44) von einem Raum gebildet wird, in welchen die Stelleinrichtung entlastet wird.

## Claims

1. A starting unit (1; 1.2; 1.2b; 1.2c);
1.1 with an input (E) which can be coupled with a drive and an output (A) which can be coupled with a power take-off;
1.2 with a starting element (4) in the form of a hydrodynamic component, comprising at least one primary blade wheel (6) and a secondary blade wheel (7), which jointly form a working chamber (8) which can be filled with an operating medium;
1.3 with a switchable clutch (9), comprising at least two clutch elements (12, 13) which can be brought in operative connection in a frictionally engaged manner directly or indirectly via further intermediate elements, a first clutch input element (12) which is connected at least indirectly in a torsionally rigid manner with the input and a second clutch output element (13) which is connected at least indirectly in a torsionally rigid manner with the output, and an actuating device (15, 14) associated with the said clutch;
1.4 with a stationary or rotating housing (17, 18) which encloses at least one of the blade wheels by forming a side chamber (47);
1.5 the actuating device (15) of the switchable clutch (9) is arranged in the side chamber (47) by forming a first operating medium supply channel or chamber (19) and can be pressurized by the pressure prevailing in the same;
1.6 the operating medium supply channel or chamber (19) can be connected at least indirectly with an operating medium supply source (41); **characterized by** the following features:
1.7 with means (2) for influencing the transmission behavior of the hydrodynamic component (5), comprising at least one mechanical installed part (3) which is held on a blade wheel and is in the form of separate elements that can be introduced into the working chamber or of elements which form partial sections of the walls of the blade wheels, which installed part acts at least indirectly upon the working circulation arising in the working chamber (8);
1.8 with an actuating device (26, 31) associated with the mechanical installed part (3) and with means for pressurizing the same with a differential pressure which is obtained from the pressure in the first operating medium guide channel or chamber (19) or a channel or chamber (30, 20) coupled with the same or the interior chamber (30) of the housing and a control pressure.

2. A starting unit (1; 1.2; 1.2b; 1.2c) according to claim 1, **characterized by** the following features:
2.1 the actuating device (26, 31) of the mechanical installed parts (3) comprises at least one cylinder-piston unit (36), comprising at least one piston element (34) guided in a cylinder (32) which forms with the same on at least two face sides (33, 37) facing away from each other working chambers (35, 25) which can be pressurized with a pressurizing medium, namely a first working chamber and a second working chamber (35);
2.2 the first working chamber (25) is connected at least indirectly with the operating medium guide channel or chamber (19) or the operating medium supply channel (20), whereas the second working chamber (35) is connected with a control pressure supply system (67);
2.3 the piston (34) is coupled with the mechanical installed parts (3) on a face side (33) averted from the face side (37) pressurized by the control pressure.

3. A starting unit (1; 1.2; 1.2b; 1.2c) according to claim 2, **characterized in that** the piston (34) is pressurized on the face side (33) coupled with the mechanical installed parts (3) by the operating medium from the first operating medium guide channel or chamber (19) or a channel or chamber (30, 20) coupled with the same.

4. A starting unit (1; 1.2; 1.2b; 1.2c) according to claim 2 or 3, **characterized in that** the control pressure supply system (67) comprises at least one constant or controllable pressure medium source which is coupled via at least one valve device (39, 40) with the actuating device (31).

5. A starting unit (1; 1.2; 1.2b; 1.2c) according to one of the claims 1 to 4, **characterized in that** pressure-medium-actuated mechanical installed parts (3) are guided either on the housing (17, 18) and/or on a blade wheel (6, 7).

6. A starting unit (1; 1.2; 1.2b; 1.2c) according to one of the claims 1 to 5, **characterized in that** the actuating devices (31, 26) associated with the individual mechanical installed parts (3) are held on the stationary housing (17, 18) or the housing which is coupled in a torsionally rigid manner with the primary blade wheel (6).

7. A starting unit (1; 1.2; 1.2b; 1.2c) according to one of the claims 4 to 6, **characterized in that** the coupling with the control pressure medium source (67) is guided through the wall of the housing (17, 18) or an element which is coupled in a torsionally rigid manner with the individual blade wheel (6, 7).

8. A starting unit (1; 1.2; 1.2b; 1.2c) according to one of the claims 1 to 7, **characterized in that** the pressure medium is guided to the actuating device (31, 26) from the operating medium supply channel or chamber (19) via a connecting line which is connected at least indirectly with the same.

9. A starting unit (1; 1.2; 1.2b; 1.2c) according to claim 8, **characterized in that** the connecting line is guided in the housing (17, 18).

10. A starting unit (1; 1.2; 1.2b; 1.2c) according to one of the claims 1 to 9, **characterized in that** the pressure-medium-actuated mechanical installed parts (3) comprises an annular slide (27) which is displaceable in the axial direction and which is formed by an element extending in the circumferential direction and being at least in the shape of a partial ring.

11. A starting unit (1; 1.2; 1.2b; 1.2c) according to one of the claims 1 to 10, **characterized in that** the pressure-medium-actuated mechanical installed parts (3) are formed by a bolt-like element which is displaceable in the axial direction.

12. A starting unit (1; 1.2; 1.2b; 1.2c) according to one of the claims 1 to 11, **characterized in that** the mechanical installed parts (3) are formed by a partial section of the wall (43) of the a blade wheel (6, 7) which is used for guiding the flow circulation.

13. A starting unit (1; 1.2; 1.2b; 1.2c) according to one of the claims 1 to 12, **characterized in that** the pressure-medium-actuated mechanical installed parts (3) are associated with the primary blade wheel (6).

14. A starting unit (1) according to one of the claims 1 to 12, **characterized in that** the pressure-medium-actuated installed parts (3) are associated with the secondary blade wheel (7).

15. A starting unit (1, 1.2) according to one of the claims 1 to 14, **characterized in that** the control pressure medium supply system (67) contains components of the operating medium supply and guide system (16).

16. A starting unit (1; 1.2) according to claim 15, **characterized in that** the control pressure source (44) is formed by the operating medium source (41).

17. A starting unit (1, 1.2) according to one of the claims 1 to 14, **characterized in that** the control pressure medium supply system (67) is formed by a hydraulic or pneumatic system arranged in the vicinity of the starting unit (1, 1.2).

18. A starting unit (1; 1.2) according to claim 17, **characterized in that** the control pressure source (44) is formed by a chamber in which the actuating device is relieved.

## Revendications

1. Unité de démarrage (1; 1.2; 1.2b; 1.2c)
1.1 avec une entrée (E) pouvant être couplée à un entraînement et une sortie (A) pouvant être couplée à un organe actionné ;
1.2 avec un élément de démarrage (4) formé d'un composant hydrodynamique, comprenant au moins une roue à aubes primaire (6) et une roue à aubes secondaire (7), formant ensemble un espace de travail (8) pouvant être rempli de fluide de travail ;
1.3 avec un accouplement embrayable (9) comprenant au moins deux éléments d'accouplement (12, 13) pouvant être amenés en relation active l'un avec l'autre par frottement, directement ou indirectement à l'aide d'autres éléments intermédiaires - un premier élément d'accouplement d'entrée (12) relié au moins indirectement avec l'entrée de façon solidaire en rotation et un deuxième élément d'accouplement de sortie (13) relié au moins indirectement avec la sortie de façon solidaire en rotation - et un dispositif de réglage (15, 14) relié à ceux-ci ;
1.4 avec un corps (17, 18) stationnaire ou rotatif qui renferme au moins une des roues à aubes en formant un espace secondaire (47) ;
1.5 le dispositif de réglage (15) de l'accouplement embrayable (9) est disposé dans l'espace secondaire (47) en formant un premier canal ou espace d'alimentation en fluide de travail (19) et peut être soumis à la pression régnant dans celui-ci ;
1.6 le canal ou espace d'alimentation en fluide de travail (19) peut être mis en communication au moins indirecte avec une source d'alimentation en fluide de travail (41) ;
**caractérisé en ce qu'**il présente les éléments suivants :
1.7 des moyens (2) pour influer sur le comportement de transmission du composant hydrodynamique (5), comprenant au moins un élément mécanique intégré (3) supporté sur une roue à aubes et prenant la forme d'un élément séparé pouvant être introduit dans le volume de travail ou d'éléments formant des parties des parois des roues à aubes, qui agit au moins indirectement sur le circuit de travail qui se crée dans l'espace de travail (8) ;
1.8 un dispositif de réglage (26, 31) associé à l'élément mécanique inséré (3) et des moyens pour soumettre celui-ci à une pression différentielle qui résulte de la pression dans le premier canal ou espace d'alimentation en fluide de travail (19) ou un canal ou espace (30, 20) couplé avec celui-ci ou dans l'intérieur du corps (30) et d'une pression de commande.

2. Unité de démarrage (1; 1.2 ; 1.2b ; 1.2c) selon la revendication 1,
**caractérisée en ce que** :
2.1 le dispositif de réglage (26, 31) des éléments mécaniques insérés (3) comprend au moins une unité de vérin (36) comportant au moins un élément de piston (34) guidé dans un cylindre (32), qui forme avec celui-ci des chambres de travail (35, 25) - une première chambre de travail et une deuxième chambre de travail (35) - pouvant être exposées à un fluide sous pression sur au moins deux faces d'extrémité (33, 37) orientées à l'opposé l'une de l'autre ;
2.2 la première chambre de travail (25) communique au moins indirectement avec le canal ou l'espace d'alimentation en fluide de travail (19) ou le canal d'alimentation en fluide de travail (20) tandis que la deuxième chambre de travail (35) communique avec un système d'alimentation en pression de commande (67) ;
2.3 le piston (34) est couplé aux éléments mécaniques insérés (3) sur une face d'extrémité (33) opposée à la face d'extrémité (37) soumise à la pression de commande.

3. Unité de démarrage (1; 1.2 ; 1.2b ; 1.2c) selon la revendication 2, **caractérisée en ce que** le piston (34) est exposé, sur la face d'extrémité (33) couplée aux éléments mécaniques insérés (3), au fluide de travail provenant du premier canal ou espace d'alimentation en fluide de travail (19) ou d'un canal ou espace (30, 20) couplé à celui-ci.

4. Unité de démarrage (1; 1.2 ; 1.2b ; 1.2c) selon la revendication 2 ou 3, **caractérisée en ce que** le système d'alimentation en pression de commande (67) comprend au moins une source constante ou réglable de fluide sous pression, qui est couplée par au moins un dispositif de soupape (39, 40) au dispositif de réglage (31).

5. Unité de démarrage (1; 1.2 ; 1.2b ; 1.2c) selon l'une des revendications 1 à 4, **caractérisée en ce que** les éléments mécaniques insérés (3) actionnés par le fluide sous pression sont guidés dans le corps (17, 18) et/ou sur une roue à aubes (6, 7).

6. Unité de démarrage (1; 1.2 ; 1.2b ; 1.2c) selon l'une des revendications 1 à 5, **caractérisée en ce que** dispositifs de réglage (31, 26) associés aux différents éléments mécaniques insérés (3) sont supportés sur le corps (17, 18) stationnaire ou couplé de façon solidaire en rotation avec la roue à aubes primaire (6).

7. Unité de démarrage (1; 1.2 ; 1.2b ; 1.2c) selon l'une des revendications 4 à 6, **caractérisée en ce que** le couplage avec la source de fluide sous pression de commande (67) passe à travers la paroi du corps (17, 18) ou un élément couplé de façon solidaire en rotation à la roue à aubes (6, 7).

8. Unité de démarrage (1; 1.2 ; 1.2b ; 1.2c) selon l'une des revendications 1 à 7, **caractérisée en ce que** le fluide sous pression sort du canal et/ou espace d'alimentation en fluide de travail (19) par une conduite de communication avec le dispositif de réglage (31, 26) qui lui est au moins indirectement reliée.

9. Unité de démarrage (1; 1.2 ; 1.2b ; 1.2c) selon la revendication 8, **caractérisée en ce que** la conduite de communication passe dans le corps (17, 18).

10. Unité de démarrage (1; 1.2 ; 1.2b ; 1.2c) selon l'une des revendications 1 à 9, **caractérisée en ce que** les éléments mécaniques insérés (3) actionnés par le fluide sous pression comprennent une coulisse annulaire (27) mobile dans le sens axial, qui est formée par un élément s'étendant dans le sens de la circonférence et au moins en forme de partie d'anneau.

11. Unité de démarrage (1; 1.2 ; 1.2b ; 1.2c) selon l'une des revendications 1 à 10, **caractérisée en ce que** les éléments mécaniques insérés (3) actionnés par le fluide sous pression sont formés d'un élément en forme de goujon mobile dans le sens axial.

12. Unité de démarrage (1; 1.2 ; 1.2b ; 1.2c) selon l'une des revendications 1 à 11, **caractérisée en ce que** les éléments mécaniques insérés (3) sont formés par une partie de la paroi (43) d'une roue à aubes (6, 7) qui sert à guider le circuit d'écoulement.

13. Unité de démarrage (1; 1.2 ; 1.2b ; 1.2c) selon l'une des revendications 1 à 12, **caractérisée en ce que** les éléments mécaniques insérés (3) actionnés par le fluide sous pression sont associés à la roue à aubes primaire (6).

14. Unité de démarrage (1) selon l'une des revendications 1 à 12, **caractérisée en ce que** les éléments mécaniques insérés (3) actionnés par le fluide sous pression sont associés à la roue à aubes secondaire (7).

15. Unité de démarrage (1, 1.2) selon l'une des revendications 1 à 14, **caractérisée en ce que** le système d'alimentation en fluide sous pression de commande (67) inclut des parties du système d'arrivée et de guidage du fluide de travail (16).

16. Unité de démarrage (1; 1.2) selon la revendication 15, **caractérisée en ce que** la source de pression de commande (44) est formée par la source de fluide de travail (41).

17. Unité de démarrage (1, 1.2) selon l'une des revendications 1 à 14, **caractérisée en ce que** le système d'alimentation en fluide sous pression de commande (67) est formé par un système hydraulique ou pneumatique disposé dans l'environnement de l'unité de démarrage (1, 1.2).

18. Unité de démarrage (1; 1.2) selon la revendication 17, **caractérisée en ce que** la source de pression de commande (44) est formée par un espace dans lequel le dispositif de réglage est déchargé.
